# EUROPÄISCHE PATENTANMELDUNG

(11) **EP 3 082 081 A1**
(43) Veröffentlichungstag der Anmeldung: **19.10.2016**
(21) Anmeldenummer: 15163866.5
(22) Anmeldetag: 16.04.2015
(51) Int. Cl.: G06Q 10/06, G06Q 10/04, G06Q 50/06, F16H 59/02, G08B 6/00

(54) **VERFAHREN UND SYSTEM ZUR HAPTISCHEN RÜCKMELDUNG VON AKTUELLEN ENERGIEVERBRAUCHSPREISEN AN DEN FAHRER EINER ANLAGE ODER MASCHINE**

(71) Anmelder: Siemens Aktiengesellschaft, 80333 München (DE)
(72) Erfinder: Jansen, Christoph, 91056 Erlangen (DE)

(57) **Zusammenfassung**

Die Erfindung betrifft ein Verfahren zur energieoptimierten Beeinflussung wenigstens einer Anlage oder Maschine (1), wobei die wenigstens eine Anlage oder Maschine eine Bedieneinheit (2) mit einer manuell verstellbaren Bedienführungseinrichtung (3) aufweist. Das Verfahren umfasst die Schritte des Empfangens einer Anzahl von Statusinformationen (7), welche die aktuellen Energiepreise für den Industriebetrieb umfassen, den Schritt der Umwandlung der Energiepreis-Statusinformationen (7) in eine Anzahl den Energiepreis repräsentierender Widerstandssignale (9) und den Schritt der Beaufschlagung der Bedieneinheit (2) der Anlage oder Maschine (1) mit dem Widerstandssignal (9), wobei es zu einer Beeinflussung in der Verstellung der Bedienführungseinrichtung (3) kommt und wobei der Widerstand einer Verstellung der Bedienführungseinrichtung (3) entgegenwirkt, wenn die Verstellung auf einen sich erhöhenden Energieverbrauch der Anlage oder Maschine (1) gerichtet ist oder wobei die Beeinflussung eine Verstellung der Bedienführungseinrichtung (3) unterstützt, wenn die Verstellung auf eine sich erhöhende Energieerzeugung durch die Anlage oder Maschine (1) gerichtet ist.

Die Erfindung betrifft ferner ein System und eine Bedieneinheit zur Durchführung des o.g. Verfahrens.

## Beschreibung

Die Erfindung betrifft ein Verfahren und ein System zur haptischen Rückmeldung von aktuellen Energieverbrauchspreisen an den Fahrer einer Anlage oder Maschine.

Energieversorger sind bestrebt, ihre großen Energieerzeugungsanlagen bei einem optimalen Wirkungsgrad und damit frei von großen Lastschwankungen zu betreiben. Dazu bedarf es bei den einzelnen Energieversorgern detaillierten Wissens darüber, welches Kosten-/Nutzenverhältnis sich bei welchen Fahrweisen des Erzeugungsparks ergibt. Dabei ist es vorteilhaft, die Lastanforderungsprofile zu kennen, um die Leistungsabnahme vorhersagen und damit den Erzeugungsbedarf weitgehend planen zu können. Die Güte dieser Erzeugungsplanung (Fahrpläne) unterliegt allerdings mehreren Störgrößen. Eine wesentliche Störgröße ist das reale Verhalten der Abnehmer von Energie. Insbesondere Industriebetriebe mit großen Energiekosten von zum Teil deutlich mehr als 5 Millionen Euro pro Jahr beeinflussen die Fahrpläne der Energieversorger maßgeblich. Aus diesem Grund sind die Energiepreise insbesondere für diese großen Abnehmer variabel gestaltet, um entweder Abnehmer zu "planungskonformen" Verhalten zu bewegen oder anderenfalls Kostenerhöhungen, die sich aus höheren oder niedrigeren als den geplanten Abnahmemengen zwangsläufig beim Energieversorger ergeben, zu kompensieren. Energiepreise sind aber auch wegen des heute weitgehend liberalisierten Energiemarktes variabel. Variabilität der Energiepreise heißt, dass sie über die Zeit veränderlich sind, wobei der Begriff Zeit mittelfristige Änderungen (Tage, Wochen, Monate), wie auch kurzfristige (Stunden, Minuten) Änderungen umfassen soll. So können sich beispielsweise in Deutschland Strompreise alle 15 min entsprechend der Lastanforderungen oder der geplanten Prognosen ändern. Mit der Veränderung der Stromerzeugungslandschaft hin zu kleineren dezentralen, volatilen Erzeugereinheiten (Wind-Anlagen, Photovoltaik-Anlagen, private Energieerzeuger) verschärfen sich auch die Preisschwankungen und können sich zukünftig auch in noch kleineren Zeitintervallen abspielen. Als Anwendungsfälle werden neben den vorgenannten variablen Strompreisen und dem Spitzenlast-Management zur grundsätzlichen Minimierung der Spitzenlast insbesondere die Mechanismen des an Bedeutung zunehmenden Kapazitätsmarkts gesehen. Ein Kapazitätsmarkt bezeichnet ein Element des Marktdesigns für den Strommarkt, bei der ein Handel nicht mit verbrauchter Strommenge, sondern bereitgestellter gesicherter Leistung stattfindet. Dadurch werden auch nicht genutzte Erzeugungskapazitäten vergütet. Die Industriebetriebe, insbesondere die vorgenannten großen Abnehmer, wollen die Preisvorteile nutzten, die sich aus der Variabilität der Energiepreise für sie ergeben können. Mit geeigneten Optimierungsalgorithmen und den relevanten Daten aus Strommarkt, Wetter sowie Rahmenbedingungen der Produktionsmittel/ Eigenerzeugungskapazitäten der Industriekunden und Fertigungs-/Produktionsplanung können erhebliche Einsparpotentiale von bis zu 5% der Gesamtenergiekosten gehoben werden, sei es über sogenannte "managed services" oder durch lokal installierte Software. Für die Optimierung wird eine Reihe von Daten analysiert wie beispielsweise Versorgungskosten und deren Randbedingungen (z.B. Mindestabnahmen), Eigenerzeugungskapazitäten und - kosten des Industriebetriebes, Speicherkapazitäten von Energie und natürlich der Energiebedarf der Produktion des Industriebetriebes. Die vorgenannte Datenanalyse kann sich dabei auf alle wesentlichen am Standort eingesetzte Energieformen beziehen, wie z.B. Elektrizität, Wärme, Gas etc.

Im Wesentlichen werden die folgenden drei Hebel gesehen, die für eine Senkung von Energiekosten benutzt werden können. So kann unter Berücksichtigung aller wesentlichen eingesetzten Energieformen zum einen der Energiemix, d.h. die Bestandteile und/oder Quellen der einzelnen Teilenergien optimiert werden. Sofern Eigenerzeugungskapazitäten zur Verfügung stehen, sind auch diese bezüglich ihres An- und Abfahrverhaltens, ihrer Wirkungsgradkurven und ihres optimalen Arbeitspunktes zu berücksichtigen. Weitere Hebel sind die Lastprognose und die intelligente Lastverschiebung, wobei letztere die geplante Verschiebung von Verbrauchern (Lasten) hin zu Zeiten günstigerer Energiepreise beinhaltet. Auch dieser Hebel bezieht sich auf alle wesentlichen Energieformen und soll also Spitzenlasten durch vorausschauende Planung vermeiden, nicht etwas durch hartes Abschalten von Verbrauchern. Solche vorausschauenden Planungen werden z.B. in übergeordneten Service Centern durchgeführt, die dann Empfehlungen ausgeben, wie Kunden ihre Anlagen oder Anlagenteile (z.B. Produktionslinien) hoch bzw. runterfahren sollten, um die Anlage energiekostenoptimiert zu betreiben. Solche Empfehlungen beinhalten sogar detaillierte "Fahrpläne" für jedes energetisch relevante Aggregat, um im Ergebnis eine Anlage energiekostenoptimiert betreiben zu können. Da solche Optimierungsrechnungen aber Empfehlungen beinhalten und somit keinen bindenden Charakter haben, bleibt es in der Verantwortung des jeweiligen Betriebes, ob und inwieweit er diesen Empfehlungen folgt. Dort wo der Produktionsprozess nicht vollautomatisch und kontinuierlich erfolgt, beeinflusst der Mensch durch die Bedienung von Anlagenteilen und Maschinen, inwieweit solche Empfehlungen umgesetzt werden. Es wird somit nicht ausbleiben, dass entweder an der Anlage oder Maschine diese Informationen gar nicht zur Verfügung stehen und/oder persönliche Vorlieben (z.B. Pausenzeiten) des Anlagenfahrers/Maschinenbedieners eine Rolle spielen und eher nicht die zwar unmittelbar wirkendenden aber für den Anlagenfahrer/ Bediener nicht offensichtlichen Energieeinsparpotentiale. Hierdurch bleiben solche Optimierungspotentiale ungenutzt. Ein automatisierte Umsetzung der Empfehlung vom vorgenannten Service Center aus, ist nicht gewünscht, da dies einer Verlagerung von wichtiger Leitsystemfunktionalität gleichkommen würde, die nicht aus der Hand gegeben werden sollen. Eine automatische Umsetzung in die Leitsystemfunktionen wäre in vielen Industriebetrieben wegen des geringen Grades der Automatisierung oftmals auch gar nicht umsetzbar.

Es ist demnach Aufgabe der Erfindung, ein Verfahren und ein System anzugeben, mit dem die Optimierungspotentiale, die den Empfehlungen der Optimierungsrechnungen zugrunde liegen, besser genutzt werden können.

Gelöst wird die Aufgabe durch das Verfahren nach Anspruch 1 und das System nach Anspruch 7 und die Bedieneinheit nach Anspruch 10. Vorteilhafte Ausgestaltungen der Erfindung sind Gegenstand der Unteransprüche.

Gelöst wird die Aufgabe durch ein Verfahren zur energieoptimierten Beeinflussung wenigstens einer Anlage oder Maschine in einem Industriebetrieb, wobei wenigstens eine Anlage oder Maschine eine Bedieneinheit mit einer manuell verstellbaren Bedienführungseinrichtung aufweist. Unter einer Anlage (auch Anlagenteil) oder Maschine in einem Industriebetrieb werden dabei vorzugsweise energetische Großverbraucher verstanden, wobei diese manuell in einem nicht kontinuierlichen Betrieb oder sog. Batchbetrieb betrieben werden. Beispielsweise werden Großpressen in einem Industriebetrieb vielfach manuell vom Anlagenfahrer und nicht kontinuierlich, d.h. auf besondere Anforderung betrieben. Der Pressendruck kann dabei vom Anlagenfahrer manuell eingestellt werden. Die energetische Leistungsaufnahme einer Presse ist abhängig vom eingestellten Pressdruck und der Bewegungsgeschwindigkeit der Presse. Als technologische Anwendungsfelder neben den Pressen kommen insbesondere Montagearbeitsplätze infrage: Punktschweißen, Handling- und Transportaufgaben (z.B. "Milkrun"-Systeme), Druckluftschrauber, Druckluftpistolen (für das Abblasen von Werkstücken) sowie das Schalten von teilautomatischen Prozessen (z.B. Nietapparate oder Prüfeinrichtungen) durch einen Bediener im sogenannten Shopfloor. Auch drehende Prozesse können infrage kommen, sofern das Werkstück einen geringen Wärmeeintrag hat, wie etwa in der Kunststoffverarbeitung. Denkbar wäre allerdings auch eine Maschine oder Anlage, die eine Energieerzeugung vornimmt.

Sofern die Maschinen manuell bedient werden können, weisen die Bedieneinheiten solcher Anlagen oder Maschinen in der Regel eine manuell verstellbare Bedienführungseinrichtung auf. Das könnten beispielsweise ein oder mehrere Schieber sein, die eine rein translatorische Bewegung ausführen. Ein weiteres Beispiel ist ein Joystickgriff, der überwiegend eine rotatorische Bewegung in verschiedenen Richtungen ausführt. Denkbar sind auch Hebel die je nach Ausgestaltung eine translatorische oder rotatorische Bewegungsart ausführen. Aber auch Überlagerungen aus beiden vorgenannten Bewegungsarten sind denkbar.

Das erfindungsgemäße Verfahren umfasst in einem ersten Schritt das Empfangen einer Anzahl von Statusinformationen. Die Statusinformationen widerspiegeln die aktuellen Energiepreise für den Industriebetrieb. Solche Statusinformationen können sich aus verschiedenen Quellen speisen. Zum einen können Daten über die aktuellen Energiekosten laufend und zyklisch auf Basis der Energiepreise vom Energieversorger abgefragt werden. Die Zyklusrate hängt dabei davon ab, wie oft ein Energieversorger geänderte Preisinformationen bereitstellt bzw. liefert. So kann eine solche Abfrage beispielsweise vorteilhaft alle 15 Minuten stattfinden, schnellere oder langsamere Zykluszeiten sind ebenso denkbar. Unter zyklischer Lieferung oder Abfrage von Statusinformationen zum Energiepreis soll auch eine Lieferung oder Abfrage verstanden werden, die zeitlich unregelmäßig stattfindet. Auf ein konstantes Pausen-Abfrageverhältnis (Abtastrate) kommt es also nicht an, diese können über den Tag oder längere Zeitabschnitte variieren. So können Abfragen zu bestimmten Tageszeiten mit einer höheren Abtastrate erfolgen, während die Abtastrate zu anderen Tageszeiten niedriger sein kann.

Die Statusinformationen zum Energiepreis können auch aus Planungs- oder Prognosetool stammen, welches von dem Energieversorger, einem Drittanbieter oder vom Industriebetrieb selbst betrieben und versorgt wird. Beispielsweise könnte ein Industriebetrieb Informationen dazu vorhalten, wie sich die Preise bei bestimmen Abnahmemengen verhalten bzw. entwickeln. Dazu müsste der Industriebetrieb die eigenen Verbrauchsdaten sammeln - ggf. korrelierend mit bestimmten Tageszeiten. Ähnliche Information könnten auch Drittanbieter bereitstellen, die beispielsweise im Informationsaustausch stehenden mit weiteren Abnehmern und ähnlich einer Börse ebenfalls aktuelle oder prognostizierte Energiepreise zur Verfügung stellen. Dabei könnten sich die vorgenannten Abnehmer aus verschiedenen Gruppen zusammensetzen. Es könnten nahezu alle großen Abnehmer umfasst sein, die bei einem bestimmen Energieversorger beziehen. Es könnte aber auch ein Abnehmerkreis sein, der sich aus mehreren Industriebetrieben einer Firma zusammensetzt.

In einem zweiten Schritt erfolgt die Umwandlung der Informationen über den aktuellen Energiepreis bzw. die Energiekosten (Energiepreis-Statusinformation) in eine Anzahl den Energiepreis repräsentierender Widerstandssignale. Es handelt sich hierbei um proportional elektrische Widerstandssignale. Diese Widerstandssignale beaufschlagen die Bedieneinheit der Anlage oder Maschine derart, dass es zu einer Beeinflussung (mechanische Kraft oder Kinematik) in der Verstellung der Bedienführungseinrichtung kommt. Bei einer energieverbrauchenden Anlage oder Maschine repräsentiert dabei eine höhere Beeinflussung einen aktuell höheren Energiepreis. Dabei ist die Beeinflussung einer auf Energieverbrauch gerichteten Verstellung entgegengesetzt gerichtet. Unter Beeinflussung ist dabei beispielsweise zu verstehen, dass eine Verstellung mechanisch erschwert wird (positiver Widerstand). Ein solcher Widerstand könnte aber auch bedeuten, dass auf eine auf Energieverbrauch gerichtete Verstellung bzw. Verstellungsanforderung mit einer anderen spürbaren Rückmeldung reagiert wird, beispielsweise einer Vibration oder einer Kombination aus Vibration und mechanischem Verstellwiderstand. Auf diese Weise spürt und erlebt der Anlagenfahrer durch die haptische Rückmeldung an der Bedienführungseinrichtung der Bedieneinheit den Zusammenhang zwischen seiner Bedienanforderung und der Energieentnahme sehr plastisch und wird daran erinnert, was die aktuelle Bedienweise hinsichtlich des Energieverbrauchs bedeutet. Bei einer energieerzeugenden Anlage oder Maschine ist unter Beeinflussung zu verstehen, dass eine Verstellung mechanisch unterstützt, erleichtert wird. (negativer Widerstand). Aber auch ein solcher Widerstand könne bedeuten, dass auf eine auf Energieerzeugung gerichtete Verstellung bzw. Verstellanforderung mit einer anderen spürbaren Rückmeldung reagiert wird, beispielsweise einer Vibration oder einer Kombination auf Vibration und mechanischer Unterstützung.

Vorteilhaft werden die Energiepreis-Statusinformationen qualitativ klassifiziert in eine Anzahl elektrischer Signale umgewandelt. Dann ändert sich der Widerstand, der an der Bedienführungseinheit spürbar ist, lediglich dann, wenn Klassen von Schwellwerten für Energiepreise überschritten sind oder ein solches Überschreiten unmittelbar bevorsteht. Auf diese Weise bekommt der Anlagenfahrer nicht vordergründig eine Rückmeldung über die Energieverbrauchsanforderung sondern tatsächlich die Rückmeldung sich in einer anderen Energiepreisklasse zu bewegen. So hat der Anlagenfahrer die Möglichkeit seine Fahrweise so anzupassen, dass kein Energiepreissprung durch ihn verursacht wird.

Nach einem weiteren Aspekt soll die qualitative Klassifizierung wenigstens in den Klassen "niedrig", "mittel" und "hoch" erfolgen. Es hat sich gezeigt, dass eine Klassifizierung in diese drei Klassen vom Anlagenfahrer gut resorbiert werden kann. Eine zu feingranulare Klassifikation wird vom Bediener nicht mehr so bewusst wahrgenommen, dass eine Verhaltensänderung folgt.

Nach einer weiteren Fortbildung der Erfindung, wird der für den Industriebetrieb geplante maximale Energieverbrauchswert für ein vorgegebenes Zeitintervall (z.B. Jahresscheiben oder 15-Minuten-Intervalle) und der aktuelle Leistungsbezug des Industriebetriebes erfasst oder ermittelt und auf eine Abweichung hin miteinander verglichen werden. Auf diese Weise kann das Verfahren auch auf ein Spitzenlastmanagement ausgedehnt werden. Der geplante maximale Energieverbrauchswert des Industriebetriebes repräsentiert den Spitzenwert, den der Industriebetrieb verbrauchen darf. Dies kann ein mit dem Energieversorger vorher für einen Zeitabschnitt abgestimmter Wert sein (offline), oder aber ein Wert sein, der über eine Daten-Verbindung zwischen Industriebetrieb und Energieversorger online zugespielt ist. Der aktuelle Leistungsbezug des Industriebetriebes (sein Gesamtenergieverbrauchswert) steht über Messungen an den Energieeinspeisepunkten bereit. Dabei sollen unter Industriebetrieb durchaus auch mehrere, räumlich getrennte und separat versorgten Betriebe zur gleichen Firma gehörig verstanden werden, jedenfalls soweit, als sie in einem Tarifraum des Energieversorgers behandelt werden.

Diesen Aspekt fortbildend, soll dann das Widerstandssignal zusätzlich auch die Höhe der Abweichung repräsentieren. D.h. die Höhe oder Intensität des Widerstandssignals wird neben den zuvor genannten Preisklassifikationen auch eine weitere Komponente erhalten, die sich beispielsweise aus der Überschreitung des maximal geplanten Energieverbrauchswertes bestimmt.

Die Aufgabe wird ferner gelöst durch ein System zur energieoptimierten Beeinflussung wenigstens einer Anlage oder Maschine in einem Industriebetrieb, wobei das System wenigstens eine Bedieneinheit mit einer manuell verstellbaren Bedienführungseinrichtung für die wenigstens eine Anlage oder Maschine aufweist und wobei der Grad der Verstellung der Bedienführungseinrichtung ein Maß für den Energieverbrauch der Anlage oder Maschine darstellt. Die Bedieneinheit ist verbunden mit einem Rechnersystem mit Speicher. Eine Datenempfangseinheit dient dem Empfangen einer Anzahl von Statusinformationen, die die aktuellen Energiepreise für den Industriebetrieb umfassen. Dazu ist die Datenempfangseinheit verbunden mit einer Institution, die solche Daten bereitstellt. Das kann der Energieversorger, der Industriebetrieb selbst oder ein Drittanbieter sein, der Planungs- oder Prognosetools unterhält und solche Daten bereithält. Diese Daten werden zyklisch empfangen und vom Rechnersystem im Speicher abgelegt. Eine Umwandlungseinheit greift auf diese Energiepreis-Statusinformationen zu und wandelt diese in eine Anzahl von Widerstandssignalen um, die den Energiepreis repräsentieren. Eine Datenausgabeeinheit verbunden mit dem Speicher gibt die Widerstandssignale als (bedienerspezifische) Widerstandssollwerte an die Bedieneinheit aus. In Abhängigkeit der Größe des Widerstandssignals kommt es zu einer Beeinflussung in der Verstellung der Bedienführungseinheit.

Die Beeinflussung wirkt einer Verstellung der Bedienführungseinrichtung entgegen, wenn die Verstellung auf einen sich erhöhenden Energieverbrauch der Anlage oder Maschine gerichtet ist. Sie unterstützt oder vereinfacht die Verstellung der Bedienführungseinrichtung, wenn die Verstellung auf eine sich erhöhende Energieerzeugung durch die Anlage oder Maschine gerichtet ist.

Die erfindungsgemäße Bedieneinheit für die Anlage oder Maschine des Industriebetriebes weist eine manuell verstellbaren Bedienführungseinrichtung zur Steuerung des Energieverbrauchs der Anlage oder Maschine auf und eine Widerstandseinheit. Über die Widerstandseinheit ist ein variabler Widerstandswert auf die Verstellung der Bedienführungseinrichtung erzeugbar. Die Widerstandseinheit ist über eine Schnittstelle mit einer Datenausgabeeinheit verbindbar, die die Widerstandseinheit mit Widerstandssolldaten versorgt. Die Widerstandseinheit kann einen elektrischen, magnetischen, pneumatischen oder hydraulischen Widerstandswert erzeugen.

Die oben beschriebenen Eigenschaften, Merkmale und Vorteile dieser Erfindung sowie die Art und Weise, wie diese erreicht werden, werden in Verbindung mit den Figuren näher erläutert. Hierbei zeigen in schematischer Darstellung:
- Fig. 1: ein System zur energieoptimierte Beeinflussung einer Anlage oder Maschine
- Fig. 2: die prinzipielle Umwandlung einer Statusinformation in ein Widerstandssignal

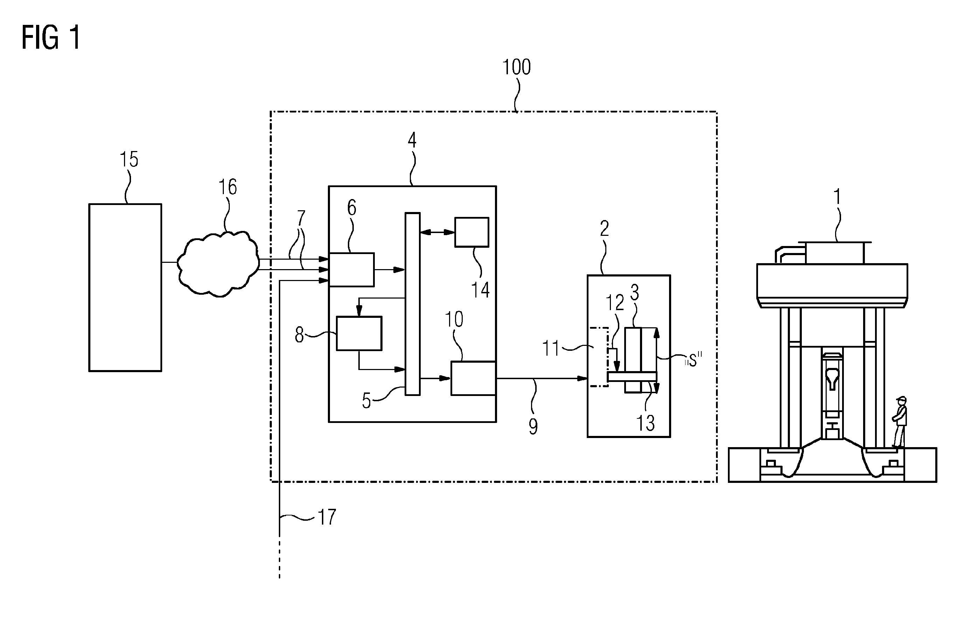

Fig. 1 zeigt ein System 100 zur energieoptimierten Beeinflussung einer Presse 1. Die Presse 1 stellt einen energetischen Großverbraucher dar, der manuell von einem Anlagenfahrer und somit nicht kontinuierlich betrieben wird. Die Bedienung, beispielsweise die Einstellung des Pressendrucks, wird über die Bedieneinheit 2 zusammen mit der Bedienführungseinrichtung 3 gewährleistet. Der Hebel 13 der Bedienführungseinrichtung 3 legt einen Verstellweg "s" zurück, wobei der Verstellweg "s" ein Maß für den Pressendruck und damit für die elektrische Leistungsaufnahme der Presse darstellt. Fig. 1 stellt beispielhaft eine Bedienführungseinrichtung 3 dar, die im Wesentlichen aus einem translatorisch verstellbaren Hebel 13 besteht. Andere Bedieneinheiten können rotatorisch arbeiten oder eine Überlagerung beider Bewegungsarten beinhalten. Die Bedieneinheit 2 umfasst ferner eine Widerstandseinheit 11, die einen Widerstandswert 12 erzeugt, der der energieverbrauchenden translatorischen Bewegung des Hebels 13 entgegengesetzt gerichtet ist. Das System 100 umfasst eine Recheneinheit 4. Die Recheneinheit 4 umfasst einen Prozessor 14, der sich in Kommunikation mit dem Speicher 5 befindet einschließlich hier nicht dargestellter, weiterer Speichereinheiten, Ein- Ausgabemodulen oder Kommunikationseinheiten. Es versteht sich, dass durch Programmierung und/oder Laden von ausführbaren Instruktionen auf der Recheneinheit 4, wenigstens Prozessor 14, Speicher 5 und andere hier nicht explizit genannte Module und Einheiten verändert werden, so dass die Recheneinheit 4 zumindest in Teilen in ein besonderes, spezialisiertes Gerät überführt wird, welches die neuartigen Funktionen ausführt, die Gegenstand der vorliegenden Spezifikation sind.

Es versteht sich weiter für den Fachmann, dass die Funktionalität, die durch Laden einer ausführbaren Software in die Recheneinheit 4 auch mit Hilfe allgemein bekannter Konvertierungsregeln in eine Hardware implementiert werden kann z.B. in einen ASIC (application specific integrated circuit). Recheneinheit 4 weist eine Datenempfangseinheit 6 auf, die eingerichtet ist eine Anzahl von Statusinformationen 7 zu empfangen, welche die aktuellen Energiepreise für den Industriebetrieb umfassen. Die Datenempfangseinheit 6 kann verschiedene Kommunikationsmodule umfassen, wie beispielsweise Modem, Ethernet-Karten, USB-Karten (universal serial bus), Powerline Module, serielle Schnittstellen, WLAN Karten (wireless local area network), Telekommunikationskarten beispielsweise basierend auf Kommunikationsstandards wie GSM, UMTS, LTE oder andere bekannte oder zukünftige Kommunikationsmodule. Die Datenempfangseinheit 6 ist über das Kommunikationsnetzwerk 16 gekoppelt mit einem oder mehreren Datenprovider 15, der über energiepreisrelevante Informationen für den Industriebetrieb verfügt. Die energiepreisrelevanten Informationen sind Informationen die den Energiepreis beeinflussen können, insoweit können sie beispielsweise auch Wetterdaten umfassen. Das Kommunikationsnetzwerk 16 kann ein öffentliches Kommunikationsnetzwerk mit mehreren potentiellen Teilnehmern (beispielsweise das Internet) sein, oder eine einfache Datenverbindung zwischen den Datenprovider 15 und Rechnereinheit 4. Ein solcher Datenprovider 15 kann der Energieversorger oder ein Drittanbieter sein. Unter Umständen kann der Datenprovider 15 auch der Industriebetrieb selbst oder ein anderer Betrieb der Firma sein, nämlich dann wenn der Betrieb der gleichen Firma über eine weitere Datenverbindung zu einem externen Datenprovider verfügt, oder wenn der Industriebetrieb über ein eigenes Prognosetool verfügt, welches auf Basis des aktuellen Leistungsbezugs Energiepreisinformationen bereitstellen kann. Die Rechnereinheit 4 umfasst eine Umwandlungseinheit 8, die wenigstens mit dem Speicher 5 verbunden ist, worüber eine Versorgung mit den Statusinformationen 7 ermöglicht wird. Umwandlungseinheit 8 wandelt mit Hilfe des Prozessors 14 die Energiepreis-Statusinformationen 7 in eine Anzahl den Energiepreis repräsentierender Signale um. Diese werden als Widerstandssignale 9 über eine mit dem Speicher 5 verbundenen Datenausgabeeinheit 10 ausgegeben und der Widerstandseinheit 11 der Bedieneinheit 2 zugeführt. Die Widerstandseinheit 11 erzeugt ein Widerstandswert 12 in Abhängigkeit des Widerstandssignals 9. Dieser Widerstandswert kann elektrischer, magnetischer, hydraulischer oder pneumatischer Natur sein und ist der energieverbrauchenden Bewegungsrichtung der Bedienführungseinrichtung 3 entgegengesetzt gerichtet. In einer Erweiterung soll die Recheneinheit 4 Verbrauchsmeldungen 17 dazu erhalten, wie der aktuelle/ kumulierte Energieverbrauch entweder des Industriebetriebes und/oder der zu steuernden Anlage oder Maschine ist. Die Statusinformationen 7 sollen zusätzlich Informationen darüber beinhalten, bei welchem Verbrauchswert ein nächster Energiepreissprung zu erwarten ist. Diese Informationen werden in der Umwandlungseinheit 8 zusätzlich verarbeitet. Das zu bildende Widerstandssignal kann somit unmittelbarer wirken und schon einen prognostizierten Energiepreissprung umfassen. Wie bereits erläutert können die Verbrauchsmeldungen 17 aber auch schon Bestandteil der Statusinformationen 7 sein.

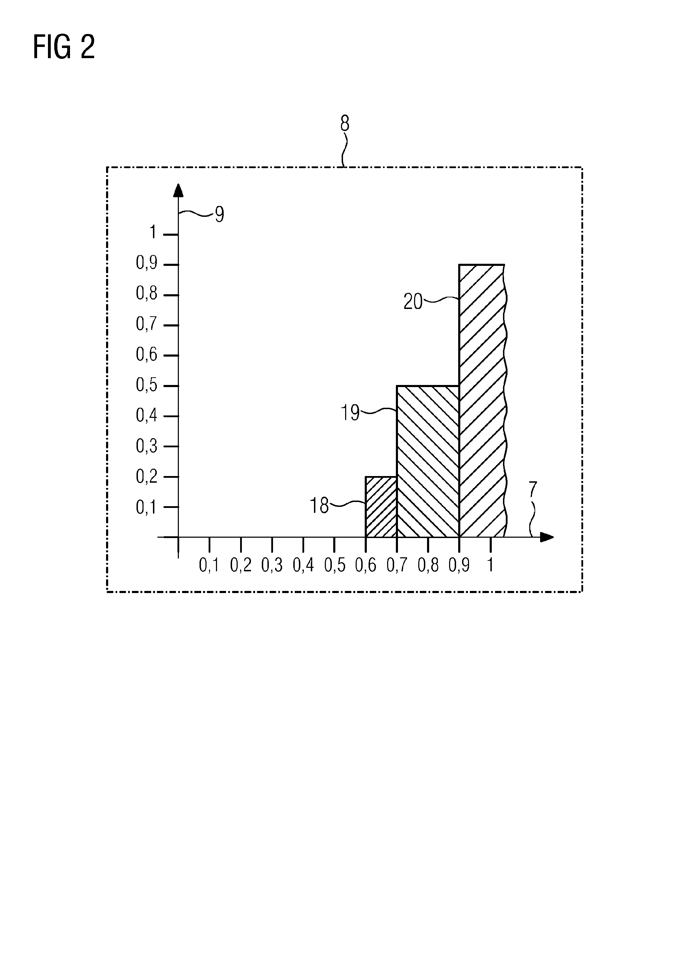

Fig. 2 veranschaulicht prinzipiell die Verarbeitung einer Statusinformation 7 in ein Widerstandssignal 9 in der Umwandlungseinheit 8. Entlang der Ordinate befindet sich das normierte Widerstandssignal 9, entlang der Abszisse die normierte Statusinformation 7. Bei der normierten Darstellung wird davon ausgegangen, dass es einen maximalen Energiepreis gibt, der mit dem Energieversorger verhandelt ist. Das Widerstandssignal von "eins" veranschaulicht das maximale Widerstandssignal, wobei das maximale Widerstandssignal nicht ein Widerstandswert 12 bedeuten soll, welcher auf die Bedienführungseinrichtung 3 wirkt und eine Verstellung des Hebels 13 nicht mehr zulässt. Vielmehr soll bei einem maximalen Widerstandssignal eine Bedienung der Maschine oder Anlage immer noch möglich sein. In Fig. 2 sind beispielhaft die diskreten Widerstandssignale 18-20 eingezeichnet. Im Beispiel soll bis zu einer Energiepreis-Statusinformation von kleiner 0,6 das Widerstandssignal 0 betragen. Erhöht sich der Energiepreis über 0,6 hinaus, ergibt sich eine Widerstandserhöhung 18 auf ein Widerstandsignal von 0,2. Dieses Widerstandssignal bleibt bis zu einer Energiepreisstatusinformation von kleiner 0,7 (normiert) konstant, um bei einer Statusinformation von gleich oder größer 0,7 eine Widerstandserhöhung 19 auf 0,5 zu erfahren. Eine weitere Widerstandserhöhung 20 zeigt Fig. 2 beispielhaft bei einer Statusinformation von 0,9.

Wie bereits erwähnt können die Statusinformationen 7 auch Informationen dazu enthalten, bei welchem Verbrauchswert ein nächster Energiepreissprung zu erwarten. In einem solchen Fall kann in der Bedieneinheit 2 unmittelbarer Widerstandswert 12 gebildet und der Bedienführungseinheit zugeführt werden.

## Patentansprüche

1. Verfahren zur energieoptimierten Beeinflussung wenigstens einer Anlage oder Maschine (1), wobei die wenigstens eine Anlage oder Maschine eine Bedieneinheit (2) mit einer manuell verstellbaren Bedienführungseinrichtung (3) aufweist umfassend die Schritte:
- Empfangen einer Anzahl von Statusinformationen (7), welche die aktuellen Energiepreise für den Industriebetrieb umfassen
- Umwandlung der Energiepreis-Statusinformationen (7) in eine Anzahl den Energiepreis repräsentierender Widerstandssignale (9)
- Beaufschlagung der Bedieneinheit (2) der Anlage oder Maschine (1) mit dem Widerstandssignal (9), wobei es zu einer Beeinflussung in der Verstellung der Bedienführungseinrichtung (3) kommt und wobei die Beeinflussung einer Verstellung der Bedienführungseinrichtung (3) entgegenwirkt, wenn die Verstellung auf einen sich erhöhenden Energieverbrauch der Anlage oder Maschine (1) gerichtet ist oder wobei die Beeinflussung eine Verstellung der Bedienführungseinrichtung (3) unterstützt, wenn die Verstellung auf eine sich erhöhende Energieerzeugung durch die Anlage oder Maschine (1) gerichtet ist.

2. Verfahren nach Anspruch 1, **dadurch gekennzeichnet, dass** die Energiepreis-Statusinformationen (7) qualitativ klassifiziert in eine Anzahl von Widerstandssignalen (9) umgewandelt werden.

3. Verfahren nach Anspruch 2, **dadurch gekennzeichnet, dass** die qualitative Klassifizierung wenigstens in den Klassen "niedrig", "mittel" und "hoch" erfolgt.

4. Verfahren nach einem der vorhergehenden Ansprüche **dadurch gekennzeichnet, dass** Widerstandswerte (12) in einer Widerstandseinheit (11) aus den Widerstandssignalen (9) erzeugt werden, die auf die Verstellung der Bedienführungseinrichtung (3) wirken.

5. Verfahren nach einem der vorhergehenden Ansprüche **dadurch gekennzeichnet, dass** der für den Industriebetrieb geplante maximale Energieverbrauchswert und der aktuelle Leistungsbezug des Industriebetriebes erfasst oder ermittelt und auf eine Abweichung hin miteinander verglichen werden.

6. Verfahren nach Anspruch 5, **dadurch gekennzeichnet, dass** das Widerstandssignal zusätzlich auch die Höhe der Abweichung repräsentiert.

7. System (100) zur energieoptimierten Beeinflussung wenigstens einer Anlage oder Maschine (1) in einem Industriebetrieb aufweisend:
- wenigstens eine Bedieneinheit (2) mit einer manuell verstellbaren Bedienführungseinrichtung (3) für die wenigstens eine Anlage oder Maschine (1), wobei der Grad der Verstellung der Bedienführungseinrichtung ein Maß für den Energieverbrauch oder ein Maß für die Energieerzeugung der Anlage oder Maschine (1) darstellt;
- wenigstens ein Rechnersystem (4) mit wenigstens einem Speicher (5)
- eine Datenempfangseinheit (6) verbunden mit dem Speicher (5) zum Empfangen einer Anzahl von Statusinformationen (7), welche die aktuellen Energiepreise für den Industriebetrieb umfassen
- eine Umwandlungseinheit (8) verbunden mit dem Speicher (5) die die Energiepreis-Statusinformationen (7) in eine Anzahl den Energiepreis repräsentierende Widerstandssignale (9) umwandelt
- eine Datenausgabeeinheit (10) verbunden mit dem Speicher (5) die die Widerstandssignale (9) ausgibt und mit der Bedieneinheit (2) der Anlage oder Maschine (1) verbunden ist, wobei es abhängig von der Größe des Widerstandssignals (9) zu einer Beeinflussung in der Verstellung der Bedienführungseinrichtung (3) kommt.

8. System nach Anspruch 7, **dadurch gekennzeichnet, dass** die Beeinflussung einer Verstellung der Bedienführungseinrichtung (3) entgegenwirkt, wenn die Verstellung auf einen sich erhöhenden Energieverbrauch der Anlage oder Maschine (1) gerichtet ist.

9. System nach Anspruch 7, **dadurch gekennzeichnet, dass** die Beeinflussung eine Verstellung der Bedienführungseinrichtung (3) unterstützt, wenn die Verstellung auf eine sich erhöhende Energieerzeugung durch die Anlage oder Maschine (1) gerichtet ist.

10. Bedieneinheit (2) für eine Anlage oder Maschine eines Industriebetriebes mit einer manuell verstellbaren Bedienführungseinrichtung (3) zur Steuerung des Energieverbrauchs der Anlage oder Maschine (1), **dadurch gekennzeichnet, dass** die Bedieneinheit (2) eine Widerstandseinheit (11) aufweist, wobei über die Widerstandseinheit (11) ein variabler Widerstandswert (12) auf die Verstellung der Bedienführungseinrichtung (3) erzeugbar ist.

11. Bedieneinheit (2) nach Anspruch 10 **dadurch gekennzeichnet, dass** die Widerstandseinheit (11) über eine Schnittstelle mit einer Datenausgabeeinheit (10) verbindbar ist, die die Widerstandseinheit (11) mit Widerstandssignalen (9) versorgt.

12. Bedieneinheit (2) nach Anspruch 10 oder 11, **dadurch gekennzeichnet, dass** der Widerstandswert (12) elektrisch, magnetisch, pneumatisch oder hydraulisch erzeugbar ist.
